(19) Europäisches Patentamt
European Patent Office
Office européen des brevets

(11) Publication number: **0 113 466**
**B1**

(12) **EUROPEAN PATENT SPECIFICATION**

(45) Date of publication of patent specification: **30.11.88**

(51) Int. Cl.$^4$: **B 64 C 3/00**

(21) Application number: **83112717.0**

(22) Date of filing: **16.12.83**

(54) **Tapered thickness-chord ratio wing.**

(30) Priority: **30.12.82 US 454588**

(43) Date of publication of application:
**18.07.84 Bulletin 84/29**

(45) Publication of the grant of the patent:
**30.11.88 Bulletin 88/48**

(84) Designated Contracting States:
**DE FR GB IT NL**

(56) References cited:
**FR-A- 545 678**
**GB-A- 307 463**
**GB-A- 647 159**
**GB-A-2 043 572**
**US-A-1 493 928**
**US-A-1 547 644**

**JOURNAL OF AIRCRAFT, vol. 18, no. 2, February 1981, pages 121-127, New York, US, P.A. Henne: "Inverse transonic wing design method"**

(73) Proprietor: **The Boeing Company**
**P.O. Box 3707**
**Seattle Washington 98124 (US)**

(72) Inventor: **Goldhammer, Mark I.**
**4801 152nd Place S.E.**
**Bellevue Washington 98006 (US)**
Inventor: **Sigalla, Armand**
**10 164th Ave. N.E.**
**Bellevue Washington 98008 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

**EP 0 113 466 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a wing suitable for use by an aircraft designed to travel at subsonic and transonic speeds, said wing including an upper surface and a lower surface, said upper and lower surfaces defining an airfoil having a leading edge and a trailing edge, said wing or airfoil having a cross-sectional configuration that defines a thickness (t) and a chord length (c), both the thickness and chord length of the cross-sections of said airfoil continuously decreasing from the root of said wing to the tip thereof, the t/c ratio of said thickness to chord length being smaller at the tip than at the root.

Such a wing is known e.g. from GB—A—647 159, which wing is designed such that stalling is prevented as much as possible.

An object of the present invention is reducing weight and drag of the known wing at subsonic and transonic speeds.

Therefore the wing according to the present invention is characterized in that the t/c ratio of said thickness to said chord length of said cross-sections of said airfoil continuously decreases from the root of said wing to the tip thereof and in that the outboard region of said wing extending from approximately 60% beyond the root of said wing to the tip of said wing, is tailored in respect to camber and said t/c ratio, such as to prevent the unsweeping of spanwise oriented isobars at said transonic speeds.

The majority of transonic wings currently in use have thickness-chord length t/c ratios, i.e., the ratio of the wing thickness to chord length, that begins at a maximum value adjacent the side of the fuselage and rapidly decreases in the outward wing direction to approximately 30% semispan. Beyond the 30% semispan location, the t/c ratio is approximately constant. This t/c ratio distribution allows the outboard portion of the wing (which is the most important portion in terms of critical mach number) to be designed using a relatively simple two-dimensional airfoil technique, which takes into account the effects of wing sweep and planform taper.

While wings having a constant t/c ratio from the 30% semispan location to the wing tip are relatively easy to design, such wings have certain disadvantages. Specifically, they are heavier than required by lift and engine loads imposed upon them. Further, they are less efficient than desired. More specifically, the air loading of a typical jet transport wing decreases along the span of the wing from approximately 75% semispan outwardly to the tip. Air loading decreases because the spanwise load is tailored to minimize induced drag and tip effects. Even though air loading decreases near the outer end of a wing, a constant t/c ratio wing is thicker than necessary in this region. That is, the outer portion of such a wing has greater structural bending strength in the spanwise direction than needed to support the decreasing air loads. Since the outboard region is thicker than necessary, the aerodynamic drag and weight of a constant t/c ratio wing is also greater than necessary.

One approach to reducing the aerodynamic drag and weight of a wing is to decrease or taper the t/c ratio of the wing continuously from wing root to tip. Decreasing wing weight by tapering the t/c ratio of the wing without consideration of three dimensional aerodynamic design would be unacceptable because such a wing would have a premature drag rise due to the unsweeping of transonic isobars, and more importantly, the shock, on the wing surface. Transonic isobar unsweeping would occur because an increasing amount of wing lift is carried on the lower surface of the wing as wing thickness is reduced. The present invention is directed to a tapered t/c ratio wing that avoids this disadvantage. That is, the present invention is directed to a tapered t/c ratio wing having a transonic isobar pattern similar to that occurring on the surface of a constant outboard t/c ratio wing.

The tapered ratio wing weighs less and has less drag than a constant t/c ratio wing (hereinafter referred to as a constant ratio wing) having equivalent speed and lift capabilities. Further, the tapered ratio wing is formed such that isobars produced at transonic speeds will not unsweep.

Preferably, the maximum camber increases from less than 0.0015c (chord length) at approximately 60% semispan to greater than 0.0085c at the tip of the wing. Tailoring the wing shape in this manner results in a tapered ratio wing that has more maximum lift coefficient capability and more buffet marging than a constant ratio wing having comparable speed and lift capabilities.

Also, preferably, the midspan region of a tapered ratio wing formed in accordance with this invention is configured to be thicker than the corresponding region of a constant ratio wing, permitting the outer skin of the wing to be thinned while maintaining adequate bending strength. Additionally, a thicker midspan region provides the tapered ratio wing with greater torsional rigidity and less weight in the area where wing-mounted engines are normally located.

Brief description of the drawings

Other aspects and advantages of the present invention will become apparent to one skilled in the art after a reading of the following description of a preferred embodiment of the invention taken together with the accompanying drawing in which:

Figure 1 is a plan view of a swept wing having a single wing-mounted engine;

Figure 2 is a side elevation, cross-sectional view of the wing taken along section line 2—2 of Figure 1;

Figure 3 is a graph showing the relationship between the thickness-chord length (t/c) ratio and spanwise location for a constant ratio wing and a tapered ratio wing;

Figure 4 is a graph showing the desired relationship between sectional lift coefficient and spanwise locations for a wing;

Figure 5a is a schematic plan view of a swept wing showing a desirable transonic isobar pattern;

Figure 5b is a schematic plan view of a swept wing showing the unsweeping of transonic isobars;

Figure 6 is a schematic side elevational view of sections of a tapered ratio wing and a constant ratio wing taken at the same spanwise location showing the difference in camber between the two wings; and,

Figure 7 is a graph showing the relationship between incremental camber separation and chordwise and spanwise location.

Detailed description

Figure 1 depicts a plan view of a tapered thickness-chord length (t/c) ratio swept wing 10 (hereinafter a "tapered ratio wing") attached to the fuselage 12 of an aircraft. Spanwise, tapered ratio wing 10 starts at a root 14 located adjacent the fuselage 12 and terminates at a tip 16. Spanwise positions on tapered ratio wing 10 are referred to herein in terms of their percent locations along the span of the wing, with the root being 0% and the tip being 100%. For descriptive purposes, the tapered ratio wing 16 is divided into inboard and outboard regions 20 and 24, respectively. The inboard region 20 extends from the wing root 14 to approximately 35% semispan, and the outboard region 24 extends from approximately 35% semispan to the wing tip 16. In the embodiment shown, a wing-mounted engine 25 is located at approximately 35% semispan.

Preferably, the planform of the tapered ratio wing 10 is the same as that of a conventional swept wing having a constant t/c ratio (hereinafter a "constant ratio wing"). As a result, the considerations involved in choosing a wing planform, such as overall aerodynamic efficiency, spanwise distribution of sectional lift coefficients, airspeed requirements, wing weight, and internal volume, are not affected by incorporation of the present invention. Since standard techniques are employed to establish the planform shape for the tapered ratio wing 10, they will not be discussed herein.

While the cross-sectional configuration (e.g., spanwise sections) of the tapered ratio wing 10 vary considerably in thickness from the root 14 to the tip 16, the location and configuration of the wing structural components of each section is substantially identical. A typical spanwise section 26 is illustrated in Figure 2 and discussed next.

The spanwise section 26 illustrated in Figure 2 includes an outer skin 30, which defines an upper surface 32 and a lower surface 34 that extend from a leading edge 36 to a trailing edge 38. In Figure 2, a camber line 42 is shown extending between the leading edge 36 and the trailing edge 38. The camber line 42 is a reference line that lies one-half the distance between the upper and lower surfaces 32 and 34. The camber line 42 is to be distinguished from the wing chord, which is the shortest distance between the leading and trailing edges 36 and 38.

Located between the upper and lower surfaces 32 and 34 are two spars—a front spar 44 and rear spar 46. The front and rear spars 44 and 46 are oriented substantially vertically and extend spanwise from the root 14 to wing tip 16 (Figure 1). The maximum distance between upper and lower surfaces 32 and 34 of any spanwise section 26 is the wing thickness of that section. The front and rear spars 44 and 46 and the portions of upper and lower surfaces 32 and 34 between the spars form a wing box 48 that is the main structural load bearing component of the tapered ratio wing 10. As will be readily appreciated by those skilled in this art from the foregoing description of Figure 2, the tapered ratio wing 10 has an arrangement of component parts that is substantially identical to that of a conventional constant ratio wing.

Since various aspects of the present invention will be best understood when explained in comparison with a conventional, constant ratio wing, the following discussion is based on such a comparison. In this regard, Figure 3 is a graph plotting the t/c ratios of a constant ratio wing and a tapered ratio wing 10 against semispan location. More specifically, dashed line A denotes the t/c ratio for a constant ratio wing, i.e., a wing having a substantially constant t/c ratio from approximately 30% semispan outward to the wing tip, and solid line B denotes the t/c ratio for tapered ratio wing 10 formed in accordance with the invention. The constant and tapered ratio wings upon which the graph of Figure 3 is based are designed to have approximately the same lift and speed capability. As can be seen from Figure 3, the t/c ratios of a tapered ratio wing 10 are the same as the t/c ratios of a constant ratio wing at only two spanwise locations—the root and 80% semispan.

The mach number capability of a typical medium aspect ratio transport wing, i.e., a wing having an aspect ratio of 6 to 10, is usually limited by the portion of the wing lying in the 60% to 80% semispan region, where the sectional lift coefficient, $C_1$, is highest (Figure 4). It is in this same semispan region that the t/c ratio curve of a tapered ratio wing 10 will cross the t/c ratio curve of a constant ratio wing designed for the same speed and lift capability. That is, while Figure 3 illustrates t/c ratio curves crossing at 80% semispan, this crossing point is to be taken as exemplary, not limiting. Curves comparing other tapered ratio wings formed in accordance with the invention with constant ratio wings having equivalent speed and lift capabilities will cross at other locations lying in the 60% to 80% semispan region.

Curve B of Figure 3 represents the t/c ratio distribution of an actual embodiment of the invention. In this embodiment, both the thickness (t) and the chord length (c) of each spanwise section 26 (Figure 2) decreased linearly

from approximately 35% semispan to the tip 16. While both thickness and chord length decreased in a linear manner, the rate of change of each parameter is different, resulting in curve B being defined by a quadratic equation. While nonlinear thickness and/or chord length changes fall within the scope of the invention, choosing a linearly varying thickness distribution has the manufacturing advantage of allowing linearly changing front and rear spars 44 and 46 to be used, as opposed to nonlinearly changing spars, which are more expensive to produce.

As noted above, preferably, the planform of the tapered ratio wing 10 is the same as a constant ratio wing having similar speed and lift capabilities. As a result, the spanwise lift distribution curve for the tapered ratio wing 10 is the same as that for a constant ratio wing. Figure 4 is an example of a spanwise distribution curve for a constant ratio, and, thus, a tapered ratio wing formed in accordance with the invention. More specifically, Figure 4 is a graph showing the distribution of sectional lift coefficient ($C_1$) for tapered ratio wing 10 with respect to percent semispan location. The relationship between sectional lift coefficient and sectional lift is given by the equation:

$$\text{Sectional Lift} = C_1\ q\ S$$

where:

$C_1$=sectional lift coefficient,

$q=1/2\ \rho\ v^2$

($\rho$=air density and v=freestream air velocity), and

S=representative area.

As will be observed from viewing Figure 4, the span loading decreases from 80% semispan outwardly (hereinafter referred to as tip region 50). It is this decrease that allows the thickness of the tip region 50 of a tapered ratio wing 10 formed in accordance with the invention to be substantially decreased. And, of course, it is the variation in thickness that reduces overall wing weight and decreases aerodynamic drag. That is, as known to those skilled in this art, the cross-sectional configuration of the tip region of a constant ratio wing is thicker than required by the bending force created by lift loads. The added thickness arises not from structural requirements, but from the use of a constant t/c ratio design approach. The end result is a wing with greater aerodynamic drag and weight than desired. While the weight of the tip region could theoretically be decreased by using thinner skin material, this approach is limited by skin materials minimum gage requirements created by fastener insertion, puncture resistance, and the need to withstand lightning strikes. The tapered ratio wing 10 overcomes these disadvantages by reducing the thickness of the tip region 50 of the wing as compared to the thickness of the tip region of a constant ratio wing. The thickness is decreased to the point where the spanwise bending strength of the tip region 50 corresponds more closely to that required to withstand the bending moments imposed by the lift forces.

Two advantages result from the thinner tip region 50 of a tapered ratio wing 10 formed in accordance with the invention. The first advantage is the reduction in weight that is achieved by reducing the height of wing box 48. The second advantage is the reduction in aerodynamic drag due to reduced thickness super velocities.

While the tip region 50 of a tapered ratio wing 10 formed in accordance with the invention is thinner than the tip region of a constant ratio wing, the remainder of outboard region 24, i.e., the 35% to 80% semispan region (hereinafter referred to as midspan region 52) is, preferably, chosen to be thicker than the corresponding region of an equivalent capability constant ratio wing. Choosing a thickness greater than that of a constant ratio wing has both weight and torsional rigidity benefits, which are discussed next.

The required bending strength of the midspan region of a constant ratio wing is normally achieved by increasing skin thickness above the minimum gage required by fastener installation, puncture resistance, etc., rather than increasing the spanwise bending strength of the structural components that support the skin. Because a tapered ratio wing avoids the tight thickness limitations of a constant ratio wing, wing thickness, and thus, spanwise strength, can be increased without requiring that skin thickness be increased over the minimum gage required by other factors. Moreover, structural component spanwise bending strength does not need to be increased since such strength is automatically increased by the thicker wing. In other words, increasing the thickness of the midspan region 52 automatically increases the spanwise bending strength of spars 44 and 46 because the height of the spars, and thus, their section modulus, is increased. The greater structural spanwise bending strength in midspan region 52 allows the thickness of the outer skin 30 to be decreased without any overall loss in spanwise bending strength. As a result, the overall weight of the midspan region 52 of a tapered ratio wing 10 relative to a constant ratio wing is decreased.

A further advantage of increasing the thickness of the midspan region 52 is an increase in the torsional rigidity of the wing in the region where a wing-mounted engine 25 is normally located, thus providing a stronger mounting structure for the engine.

While the drag of the midspan region 52 of a tapered ratio wing 10 formed in accordance with the invention is increased by a small amount (when compared to a constant ratio wing with the same capabilities) due to the increase in wing thickness, the increase in overall aircraft efficiency gained by the decreased weight of a tapered ratio wing 10 is greater than the decrease in efficiency resulting from the increased drag.

The thickness of the inboard region 20 of a tapered ratio wing 10 formed in accordance with this invention is, preferably, chosen to be the

same as the corresponding thickness of this region of a constant ratio wing. As known to those skilled in the art, the sections in the inboard region of a conventional, constant ratio wing require extensive three-dimensional aerodynamic design. The inboard sections of a tapered ratio wing 10 formed in accordance with the invention requires similar design tailoring. The required tailoring techniques are well-known to those skilled in the art and they will not be discussed herein.

Since no portion of a tapered ratio wing 10 formed in accordance with this invention behaves like a two-dimensional airfoil, the entire outboard region 24 must also be tailored. Without tailoring, the transonic isobars and shock developed on the wing will unsweep in the outboard region 24 (see Figure 5b), resulting in increased drag. In this regard, a preferred transonic isobar pattern for the upper surface 32 of a swept wing is depicted in Figure 5a. As illustrated, the isobars 54 on the outboard region 24 of the wing lie substantially parallel to the sweep of the wing. In order to achieve a desirable isobar pattern (Figure 5a) and not a pattern that results in the unsweeping of isobars (Figure 5b), a tapered ratio wing 10 formed in accordance with the invention is tailored by "over-cambering" the wing relative to the camber of a constant ratio wing.

The concept of over-cambering is illustrated in Figure 6, wherein equal chord length sections of a tapered ratio wing 10 and a constant ratio wing having comparable lift and speed capabilities are compared. In this Figure, a section 56 of a constant ratio wing having a camber line 58 is depicted by solid lines and a section 60 of a tapered ratio wing formed in accordance with the invention having a camber line 62 is depicted by dashed lines. As clearly shown in Figure 6, the camber line 62 of the tapered ratio wing section 60 lies above the camber line 58 of the constant ratio wing section 56. The separation between the two camber lines defines an incremental camber separation $\Delta z$, which starts at zero at the leading edge of the wing, increases to a maximum value at some point located forward of the 50% chord line, and then decreases to zero at the trailing edge of the wing. Further, the incremental camber separation $\Delta z$ of the preferred embodiment of a tapered ratio wing 10 formed in accordance with this invention increases in the spanwise direction from approximately 60% semispan to the tip 16.

As shown in Figure 7, in one actual embodiment of the invention, the maximum incremental camber separation at 63% semispan was reached at approximately the 39% chord position and had a value of approximately .0015 chord length at the semispan position; the maximum incremental camber separation at 79% semispan was reached at approximately the 43% chord position and had a value of approximately .0042 to the chord length at this semispan position; the maximum incremental camber separation at 88% semispan was reached at approximately the 41% chord position and had a value of approximately .0055 of the chord length at this semispan position; the maximum incremental camber distance at 95% semispan was reached at approximately the 41% chord position and had a value of approximately .007 of the chord length at this semispan position; and, the maximum incremental camber distance at 100% semispan was reached at approximately the 41% chord position and had a value of approximately .0082 of the chord length at this semispan position.

The determination of the additional camber necessary to blend the continuously tapering sections of tapered ratio wing 10 together into an acceptable three-dimensional wing design can be accomplished by a variety of techniques well-known to practicing aerodynamicists. One approach to the problem uses a transonic wing analysis/design finite difference solution, such as the well accepted computer program of Anthony Jameson of the Courant Institute of Mathematics at New York University, to design very accurately the upper surface for the desired upper surface isobar pattern. Another approach uses a linearized camber/thickness lifting surface theory computer program in which the wing is represented by planar distributions of discrete vortex and source panels that mathematically represent the camber and thickness of the wing, respectively. A finite element solution for the vortex and source panel strengths is formulated to yield the desired upper and lower surface distributions. For a tapered ratio wing 10 formed in accordance with the present invention, after the thickness envelopes of the wing are specified by fixing the surface source distribution, the camber distribution can be determined from the desired upper surface distribution developed in the manner just described. There are a number of computer programs available to solve this type of problem, or one can be formulated from text book information. Use of a large digital computer is required. Finally, a reasonably close camber design can be accomplished rather quickly by trial and error design and analysis cycles using any standard potential flow wing analysis program, many of which are in the public domain and readily available from the National Aeronautical and Space Administration, universities, etc.

In addition to the weight improvement discussed above, due to the aerodynamic tailoring required to make the tapered ratio wing 10 formed in accordance with the invention work at transonic speeds, it has been found that such a wing has more maximum lift coefficient capability and more buffet margin than a comparable constant ratio wing. These improvements in the performance of the tapered ratio wing 10 formed in accordance with the invention appear to be a direct consequence of the increased incremental camber separation on outboard region 24 of the wing included to achieve the desired transonic isobar pattern.

While a tapered ratio wing formed in accordance with the invention having a linear chord length decrease and a linear thickness decrease

(at different rates) has manufacturing advantages, the decreasing rate of change of either or both of these parameters may be nonlinear if desired. Additionally, as will be recognized by those skilled in the art, a tapered ratio wing formed in accordance with this invention may include discontinuities in the decreasing t/c ratio, i.e., a constant or increasing t/c ratio, for the installation of lights, mechanical systems, or other auxiliary equipment. A tapered ratio wing formed with such discontinuities in the t/c ratio does not depart from the scope of the invention as claimed. Further, the tailoring of the outboard portion of the wing discussed above and depicted in Figure 7 are considered exemplary, not limiting.

**Claims**

1. A wing (10) suitable for use by an aircraft designed to travel at subsonic and transonic speeds, said wing (10) including an upper surface (32) and a lower surface (34), said upper and lower surfaces defining an airfoil having a leading edge (36) and a trailing edge (38), said wing or airfoil having a cross-sectional configuration that defines a thickness t and a chord length c, both the thickness and chord length of the cross-sections of said airfoil continuously decreasing from the root of said wing to the tip thereof, the t/c ratio of said thickness to chord length being smaller at the tip than at the root, characterized in that the t/c ratio of said thickness to said chord length of said cross-sections of said airfoil continuously decreases from the root of said wing to the tip thereof and in that the outboard region of said wing extending from approximately 60% beyond the root of said wing to the tip of said wing, is tailored in respect to camber and said t/c ratio, such as to prevent the unsweeping of spanwise oriented isobars at said transonic speeds.

2. A tapered wing (10) as claimed in claim 1, wherein the thickness t of said airfoil cross-sections decreases in a linear manner.

3. A tapered wing (10) as claimed in claims 1 or 2, wherein the chord length c of said airfoil cross-sections decreases in a linear manner.

4. A tapered wing (10) as claimed in claim 3, wherein the rate of linear decrease of the thickness t of said airfoil cross-sections is different from the rate of linear decrease of the chord length c of said airfoil.

5. A tapered wing as claimed in any one of the preceding claims, wherein the continuous decrease of the ratio of said thickness to said chord length of said airfoil cross-sections occurs in a manner capable of representation by a quadratic equation.

6. A tapered wing (10) as claimed in any one of the preceding claims, wherein the ratio t/c of said thickness t to chord length c varies with semispan location substantially as indicated by curve B of Figure 3.

**Patentansprüche**

1. Flügel (10), der für die Verwendung mittels eines Flugzeugs geeignet ist, welches zum Zurücklegen einer Strecke mit subsonischen und schallnahen Geschwindigkeiten ausgelegt ist, wobei der Flügel (10) eine obere Oberfläche (32) und eine untere Oberfläche (34) aufweist, wobei die obere und untere Oberfläche eine Tragfläche begrenzen, die eine Anströmkante (36) und eine Abströmkante (38) hat, wobei der Flügel oder die Tragfläche eine Querschnittskonfiguration hat, die eine Dicke t und eine Profilsehnenlänge c definiert, wobei sowohl die Dicke als auch die Profilsehnenlänge der Querschnitte der Tragfläche kontinuierlich von der Wurzel des Flügels zu dessen Spitze abnehmen, wobei das Verhältnis t/c der Dicke zu der Profilsehnenlänge an der Spitze kleiner als an der Wurzel ist, dadurch gekennzeichnet, daß das Verhältnis t/c der Dicke zu der Profilsehnenlänge der Querschnitte der Tragfläche kontinuierlich von der Wurzel des Flügels zu dessen Spitze abnimmt, und daß der Außenbordbereich des Flügels, der sich von angenähert 60% jenseits der Wurzel des Flügels zu der Spitze des Flügels erstreckt, in bezug auf Wölbung und das Verhältnis t/c derart zugeschnitten ist, daß das Nichtdurchlaufen von spannweitenweise ausgerichteten Isobaren bei den erwähnten schallnahen Geschwindigkeiten verhindert wird.

2. Verjüngter Flügel (10) nach Anspruch 1, dadurch gekennzeichnet, daß die Dicke t der Tragflächenquerschnitte in einer linearen Weise abnimmt.

3. Verjüngter Flügel (10) nach Anspruch 1 oder 2, dadurch gekennzeichnet, daß die Profilsehnenlänge c der Tragflächenquerschnitte in einer linearen Weise abnimmt.

4. Verjüngter Flügel (10) nach Anspruch 3, dadurch gekennzeichnet, daß die Rate des linearen Abnehmens der Dicke t der Tragflächenquerschnitte unterschiedlich von der Rate des linearen Abnehmens der Profilsehnenlänge c der Tragfläche ist.

5. Verjüngter Flügel nach irgendeinem der vorhergehenden Ansprüche, dadurch gekennzeichnet, daß das kontinuierliche Abnehmen des Verhältnisses der Dicke zu der Profilsehnenlänge der Tragflächenquerschnitte in einer Weise auftritt, die fähig ist, durch eine quadratische Gleichung repräsentiert zu werden.

6. Verjüngter Flügel (10) nach irgendeinem der vorhergehenden Ansprüche, dadurch gekennzeichnet, daß das Verhältnis t/c der Dicke t zur Profilsehnenlänge c mit dem Halbspannweitenort im wesentlichen wie durch die Kurve B der Figur 3 angegeben variiert.

**Revendications**

1. Aile (10) pouvant être utilisée par un aéronef destiné à se déplacer à des vitesses subsoniques et transsoniques, l'aile (10) ayant une surface supérieure (32) et une surface inférieure (34), les surfaces supérieure et inférieure formant un profil

ayant un bord d'attaque (36) et un bord de fuite (38), l'aile ou le profil ayant une configuration en coupe qui détermine une épaisseur t et une longueur de corde c, l'épaisseur et la longueur de la corde des sections du profil diminuant de façon continue du pied de l'aile vers son bout, le rapport t/c de l'épaisseur à la longueur de la corde étant plus petit au bout qu'au pied, caractérisée en ce que le rapport t/c de l'épaisseur à la longueur de la corde des sections du proil diminue de façon continue du pied de l'aile à son bout, et en ce que la région externe de l'aile, disposée à partir de 60% environ du pied de l'aile vers le bout de celle-ci, est adaptée en cambrure et en rapport t/c afin que le défaut de convergence des isobares orientées suivant l'envergure soit évité aux vitesses transsoniques.

2. Aile (10) à variation progressive selon la revendication 1, dans laquelle l'épaisseur t des sections du profil diminue de manière linéaire.

3. Aile (10) à variation progressive selon la revendication 1 ou 2, dans laquelle la longueur de la corde c des sections du profil diminue de manière linéaire.

4. Aile (10) à variation progressive selon la revendication 3, dans laquelle la vitesse de diminutation linéaire de l'épaisseur t des sections du profil est différente de la vitesse de réduction linéaire de la longueur de la corde c du profil.

5. Aile à variation progressive selon l'une quelconque des revendications précédentes, dans laquelle la réduction continue du rapport de l'épaisseur à la longueur de la corde des sections du profil est réalisée d'une manière qui peut être représentée par une équation quadratique.

6. Aile (10) à variation progressive selon l'une quelconque des revendications précédentes, dans laquelle le rapport t/c de l'épaisseur t à la longuer de la corde c varie avec l'emplacement suivant la demi-envergure pratiquement comme indiqué par la courbe B de la figure 3.

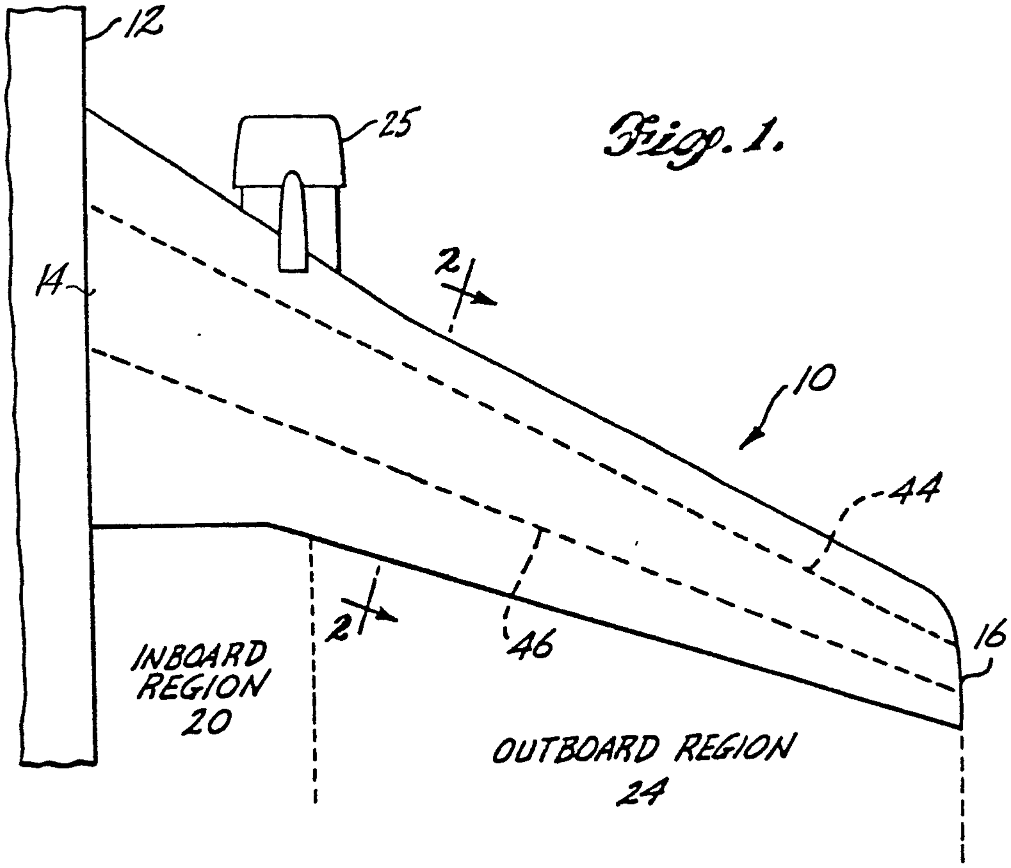
12
25
14
2
2
10
44
46
16
INBOARD REGION 20
OUTBOARD REGION 24

Fig. 1.

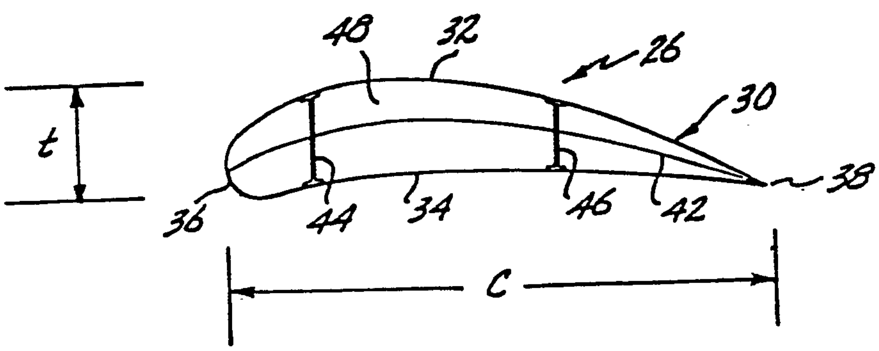
48
32
26
30
t
36
44
34
46
42
38
c

Fig. 2.

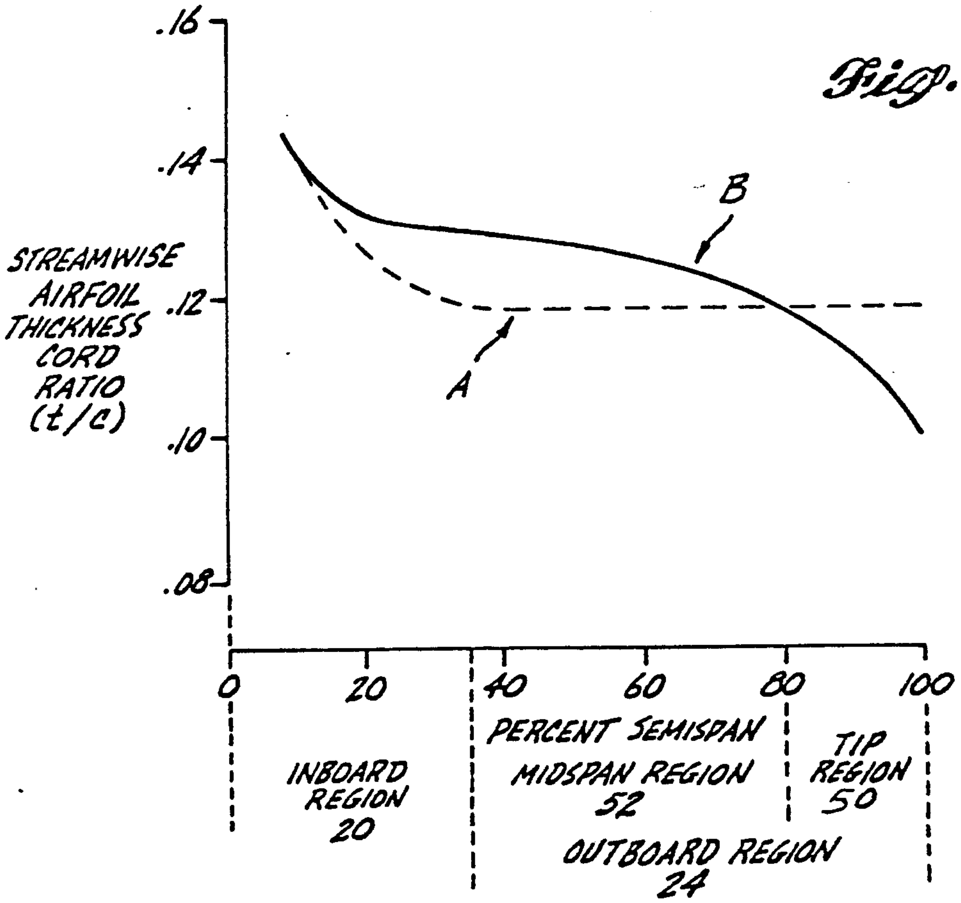
.16
.14
.12
.10
.08
STREAMWISE AIRFOIL THICKNESS CORD RATIO (t/c)
B
A
0
20
40
60
80
100
PERCENT SEMISPAN
INBOARD REGION 20
MIDSPAN REGION 52
TIP REGION 50
OUTBOARD REGION 24

Fig. 3.

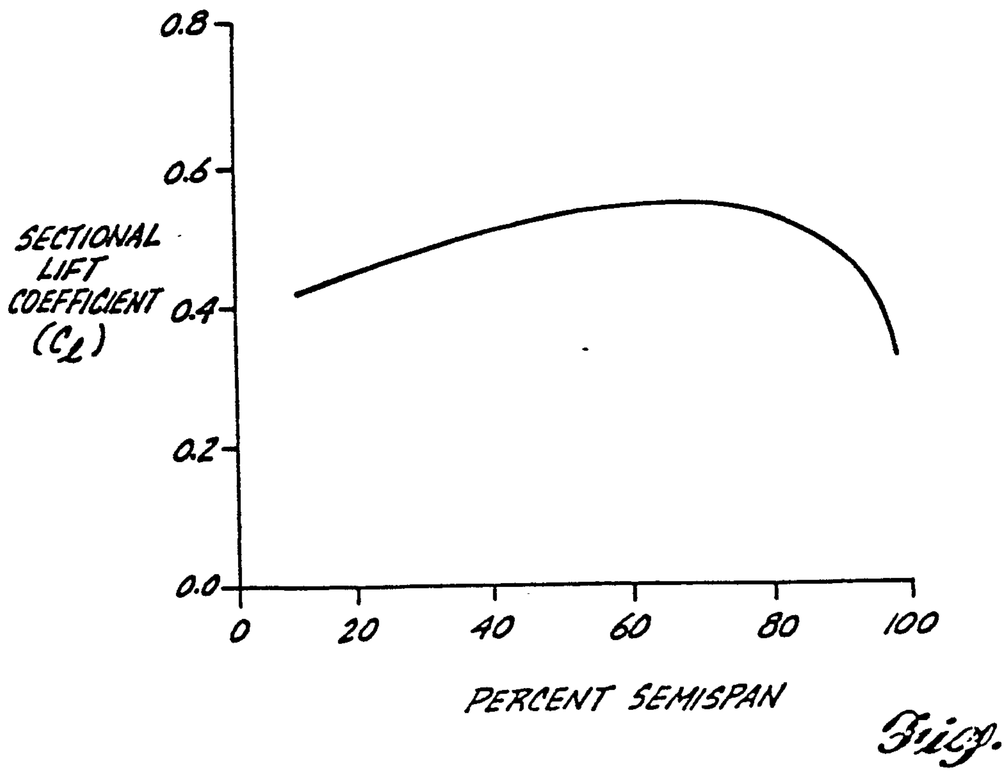
0.8
0.6
0.4
0.2
0.0
SECTIONAL LIFT COEFFICIENT ($C_L$)
0
20
40
60
80
100
PERCENT SEMISPAN

Fig. 4.

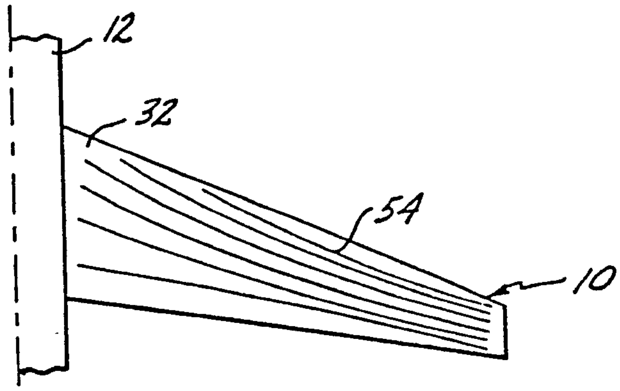


Fig. 5a.

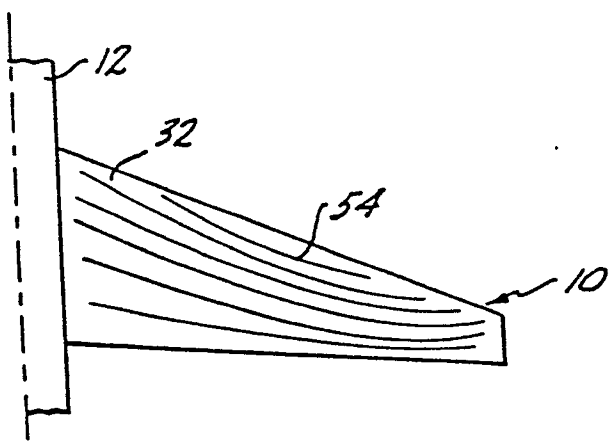


Fig. 5b.

Fig. 6.

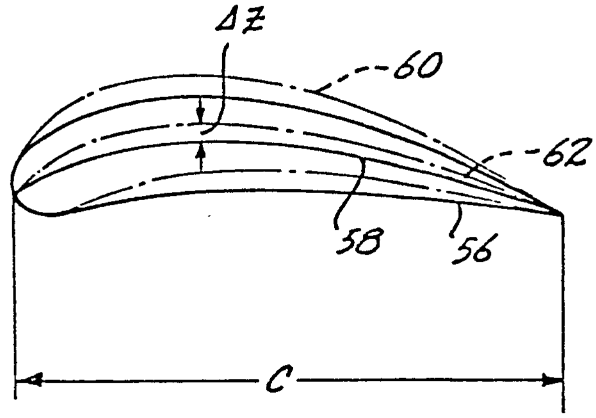
ΔZ
60
62
58
56
C

Fig. 7.

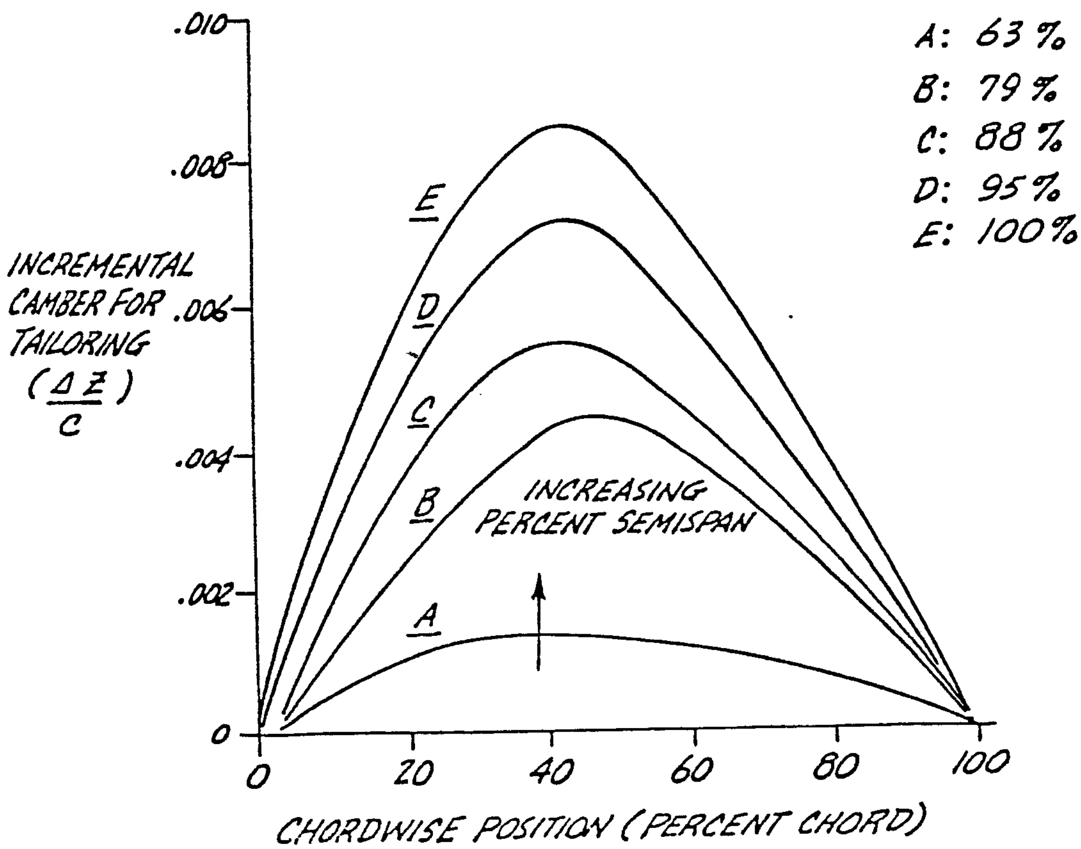
A: 63 %
B: 79 %
C: 88 %
D: 95 %
E: 100 %
INCREMENTAL CAMBER FOR TAILORING (ΔZ/C)
.010
.008
.006
.004
.002
0
E
D
C
B
A
INCREASING PERCENT SEMISPAN
0
20
40
60
80
100
CHORDWISE POSITION (PERCENT CHORD)